# EUROPÄISCHE PATENTSCHRIFT

(11) **EP 2 172 591 B1**
(45) Veröffentlichungstag und Bekanntmachung des Hinweises auf die Patenterteilung: **19.11.2014**
(21) Anmeldenummer: 09170014.6
(22) Anmeldetag: 11.09.2009
(51) Int. Cl.: D21H 21/02, D21C 5/02, D21C 9/08, D21H 17/70

(54) **Anlage und Verfahren zur Papierproduktion**
Assembly and method for paper production
Installation et procédé de production de papier

(30) Priorität: 29.09.2008 DE 102008049334
(43) Veröffentlichungstag der Anmeldung: 07.04.2010
(73) Patentinhaber: Messer Austria GmbH, 2352 Gumpoldskirchen (AT); Messer Schweiz AG, 5600 Lenzburg (CH)
(72) Erfinder: Gutenberger, Helmut, 4652, Fischlham (AT); Rohovec, Joachim, 2500, Baden (AT); Schlatter, Robert, 5606, Dintikon (CH)
(74) Vertreter: Münzel, Joachim R.

(56) Entgegenhaltungen:
- WO-A-2009/034056
- DE-A1- 4 419 540
- DE-A1- 10 024 790
- US-A- 6 159 381

## Beschreibung

Die Erfindung betrifft eine Anlage zur Papierproduktion, bei der an einem Standort eine Papierfabrik mit einer Anordnung zur Rohstoffvorbehandlung und einer Papiermaschine sowie ein Kraftwerk zur Erzeugung elektrischer Energie für die Papierfabrik vorgesehen ist. Die Erfindung betrifft ferner ein Verfahren zum Betreiben einer Papierfabrik.

Der Betrieb einer Fabrik zur Herstellung von Papier oder Karton ist mit hohen Einsätzen an verschiedenen Rohstoffen und erheblichen Belastungen für die Umwelt verbunden. In vielen Industrieländern gehört die Papierindustrie zu den größten Stromverbrauchern. Große Papierfabriken mit einem Jahresausstoß von 500000t Papier weisen einen Jahrsstromverbrauch von etwa 600 - 700 GWh auf, mit einer Spitzenleistung von 980 - 100 MW. Insbesondere benötigen Mahl- und Schleifprozesse zur Aufarbeitung des zur Papierherstellung benötigten Faserwerkstoffes ein hohes Maß an Energie. Der spezifische Energiebedarf hierfür beträgt je nach Verfahren zwischen 1500 und 2200 kWh pro Tonne Faserstoff. Ein Großteil der benötigten Energie wird dabei in eigenen Kraftwerken am Standort hergestellt, die üblicherweise mit fossilen Brennstoffen betrieben werden und zum Betrieb entsprechende Emissionszertifikate benötigen.

Weitere Umweltbelastungen betreffen insbesondere die Aspekte des Wasserverbrauchs, der Emissionen an Schadstoffen in Luft und Abwasser und des Einsatzes an problematischen Chemikalien. So entstehen bei der Papierproduktion große Mengen an Abwasser, das in einem aufwändigen Verfahren geklärt werden muss. Überlegungen, das Wasser zu klären und innerhalb der Fabrik zu einem Kreislauf zu führen, sind bereits in der Praxis umgesetzt worden, jedoch ist für die Klärung und Rückführung des Wassers ein zusätzlicher Aufwand an Energie und Chemikalien notwendig. In diesem Zusammenhang wurde auch bereits vorgeschlagen, das bei der biologischen Reinigung des Abwassers entstehende Biogas als Brennstoff im betriebseigenen Kraftwerk einzusetzen.

Weiterhin erfolgt in Papierfabriken ein starker Einsatz von Bioziden, mittels derer die mikrobiologische Aktivität in verschiedenen Prozessabschnitten reduziert werden soll. Zu nennen ist hier insbesondere die Aufarbeitung des beim Produktionsprozess anfallenden Ausschusses: Der Ausschuss wird vor seiner Wiederverwertung in sogenannten Ausschussbehältern für 24h oder länger gelagert. Als Alternative zum Einsatz von Bioziden wird in der DE 60102015 T2 der Einsatz von Kohlendioxid vorgeschlagen. Bekannt ist weiterhin ein Verfahren, bei dem die in den Ausschussbehältern vorliegende Suspension abwechselnd einem sauren und einem alkalischen Milieu ausgesetzt werden.

Weiterhin ist es im Papierherstellungsprozess erforderlich, die Ausgangsmaterialien zu bleichen. Hierzu kommen in der Regel Chemikalien wie Wasserstoffperoxid, Chlor oder Chlorverbindungen zum Einsatz, die zu einer zusätzlichen Belastung des Abwassers führen. Es wurde bereits vorgeschlagen, Sauerstoff als Bleichmittel einzusetzen. Die Versorgung einer Papierfabrik mit den entsprechend notwendigen Mengen an Sauerstoff ist jedoch mit hohen Kosten verbunden und für sich genommen nicht wirtschaftlich.

Weiterhin ist es notwendig, die bei der Papierherstellung eingesetzten Bänder, insbesondere im Bereich der Trockenpartie, von klebrigen Teilen zu reinigen, die im Laufe des Herstellungsprozesses auf den Bändern, z.B. den Trockensieben, haften bleiben. Da das Stilllegen der Bänder und die anschließende Reinigung mit erheblichen Produktionsausfällen verbunden sind, wurde bereits versucht, die Bänder "on-line" d.h. bei laufender Produktion zu reinigen. So wird in der DE 4419540 C2 beschrieben, ein bei der Papierherstellung eingesetztes Band bei laufender Produktion durch Bestrahlen mit Wasser, Dampf oder Luft oder mittels reinigender Chemikalien zu säubern. Insbesondere soll die Kombination von wenigstens drei unterschiedlichen Medien zu guten Reinigungseffekten führen. Jedoch ergibt sich auch hier ein zusätzlicher Wasserverbrauch bzw. eine zusätzliche Belastung der Umwelt.

Zunehmende Brennstoffkosten, aber auch steigende Kosten für Emissionszertifikate für bei der Energieerzeugung anfallendes Kohlendioxid, zunehmendes Umweltbewusstsein in der Öffentlichkeit und dementsprechende Akzeptanzprobleme zwingen die Papierfabriken dazu, weiter über Verringerungen des Energieverbrauchs und des Einsatzes an Roh- und Hilfsstoffen, wie auch der Reduzierung von Emissionen nachzudenken.

Um die CO₂-Emissionsbilan einer Papierfabrik zu verbessern, wurde in der DE 100 24 790 A1 bereits vorgeschlagen, für bestimmte Verfahren der Papiererzeugung, beispielsweise zur Beladung von Fasern mit dem Füllstoff Calciumcarbonat nach dem "Fiber-Loading" Verfahren, Kohlendioxid zu verwenden, das aus dem Rauchgas eines auf dem Gelände der Papierfabrik vorhandenen Kraftwerks gewonnen wurde. Dennoch besteht weiterhin ein großer Bedarf zur Einsparung von Emissionen und Kosten beim Betreiben einer Papierfabrik.

Hieraus ergibt sich die Aufgabe, den Einsatz von Energie sowie Roh- und Hilfsstoffen bei der Herstellung von Papier, Pappe oder Karton zu senken und gleichzeitig die Emissionen, insbesondere von problematischen Chemikalien und von zertifikatpflichtigen Substanzen wie Kohlendioxid, zu reduzieren. Im Folgenden soll der Begriff "Papierfabrik" auch Fabriken zur Herstellung von Pappe oder Karton und der Begriff "Papierproduktion" auch Verfahren zur Herstellung von Pappe oder Karton mit einschließen.

Gelöst ist diese Aufgabe durch eine Anlage zur Papierproduktion mit den im Patentanspruch 1 genannten Merkmalen sowie durch ein Verfahren zum Betreiben einer Papierfabrik mit den in Anspruch 10 genannten Merkmalen.

Eine Anlage zur Papierproduktion der eingangs genannten Art ist erfindungsgemäß also dadurch gekennzeichnet, dass das Kraftwerk von einem Kraftwerkstyp ist, in dem der Brennstoff mittels zumindest weitgehend reinen Sauerstoffs unter Entstehung von zumindest weitgehend reinem Kohlendioxid umgesetzt wird dass Mittel zum Zuführen von im Kraftwerk erzeugtem Kohlendioxid zu Kohlendioxid verbrauchenden Teilprozessen in der Papierfabrik vorgesehen sind, wobei der im Kraftwerk benötigte Sauerstoff vor Ort in einer Einrichtung zum Erzeugen von Sauerstoff hergestellt, dem zweckmäßigerweise zudem eine Einrichtung zum Erzeugen in Ozon aus einem Teil dieses Sauerstoffs in nachgeschaltet ist.

Durch die Kombination einer Papierfabrik mit einem Kraftwerk, bei dem prozessbedingt reines oder nahezu reines Kohlendioxid als Abgas entsteht, lassen sich erhebliche Synergieeffekte erzielen, da Kohlendioxid in einer Fülle von Teilprozessen bei der Papierherstellung zum Einsatz kommt. Der Einsatz des im Kraftwerk erzeugten Kohlendioxids in derartigen Teilprozessen erspart insbesondere in nicht unerheblichem Umfang den Erwerb von Emissionszertifikaten.

Um möglichst reines Kohlendioxid als Abgas im Kraftwerk zu erhalten, wird reiner oder nahezu reiner Sauerstoff (mit einem Sauerstoffgehalt von wenigstens 95 Vol-%, bevorzugt wenigstens 99 Vol.-%) als Oxidationsmittel verwendet. Als Brennstoff im Kraftwerk kommt insbesondere Kohle, Erdöl oder Erdgas zum Einsatz. Jedoch ist z.B. auch der Einsatz anderer Stoff denkbar wie z.B. Biogas oder Abfall.

Beim Kraftwerk handelt es sich bevorzugt um ein Kraftwerk vom "Oxyfuel"-, bzw. Nachverbrennungsabtrennungs- ("Pre-Combustion-Capture")- Typ. Bei diesem Prozess wird der Brennstoff mit Sauerstoff unter Bildung von Kohlendioxid verbrannt, das anschließend aus dem Rauchgas abgeleitet wird. Gegebenenfalls wird ein Teil des Kohlendioxids als Moderationsgas in die Verbrennungskammer der Gasturbine zurückgeführt. Alternativ kann der Brennstoff aber auch vor dem Verbrennungsprozess mit Wasser zu Wasserstoff unter Abscheidung von Kohlendioxid reformiert werden. In der Gasturbine des Kraftwerks wird anschließend der Wasserstoff mit Sauerstoff unter Bildung von Wasser verbrannt (Vorverbrennungsabtrennung des Kohlendioxids; "Pre-Combustion Capture").

Der vor Ort hergestellte Sauerstoff wird, in dem Umfang, in dem er nicht als Oxidationsmittel im Kraftwerk eingesetzt wird, vorteilhaft in verschiedenen Teilprozessen der Papierherstellung eingesetzt. Das gleiche gilt für Ozon. Sowohl Sauerstoff als auch Ozon können beispielsweise in der Bleiche des Papierrohstoffs oder zur Abwasserklärung eingesetzt werden. Aufgrund der vorstehend genannten Synergieeffekte ist auch der Einsatz von Sauerstoff für die Bleichung wirtschaftlich, da lediglich ein Überschuss des insgesamt produzierten Sauerstoffes in den Sauerstoff verbrauchenden Teilprozessen eingesetzt wird. Der Einsatz von Wasserstoffperoxid oder von Chlorverbindungen zur Bleichung kann daher zumindest weitgehend entfallen.

Bevorzugt ist als Einrichtung zur Erzeugung von Sauerstoff eine Einrichtung zur Luftzerlegung vorgesehen, in der neben Sauerstoff zumindest Stickstoff erzeugt wird. Bei dieser Einrichtung kann es sich beispielsweise um eine Druckwechseladsorptionsanlage (VPSA) oder um eine kryogene Luftzerlegungsanlage handeln.

Durch geeignete Mittel zum Zuführen des in der Luftzerlegungsanlage erzeugten Stickstoffs zu Stickstoff verbrauchenden Teilprozessen in der Papierfabrik lassen sich weitere Synergieeffekte erzielen, indem auch der erzeugte Stickstoff einer entsprechenden Verwertung zugeführt wird. Insbesondere kann der Stickstoff zum Kühlen und/oder Inertisieren eingesetzt werden. Eine besonders vorteilhafte Weiterbildung der Erfindung sieht dabei vor, dass der in der Luftzerlegungsanlage erzeugte Stickstoff einer der Anordnung zur Rohstoffvorbehandlung zugeordneten Mahleinrichtung zugeführt wird, da durch den Eintrag von insbesondere verflüssigtem Stickstoff in die Fasersuspension deren Mahleigenschaften verbessert werden.

Um zusätzliche Synergieeffekte zu erzielen ist es zweckmäßig, ein Abwasserklärwerk zur Reinigung des bei der Rohstoffvorbehandlung und in der Papiermaschine anfallenden Abwassers vorzusehen, dem zwecks biologischer Abwasserbehandlung Sauerstoff und/oder Ozon, der in der Einrichtung zur Sauerstofferzeugung bzw. in einem Ozonisator hergestellt wurde, zugeführt wird.

Beim Kraftwerk handelt es sich bevorzugt um ein Kraftwerk vom GuD - ("Gas und Dampf") - Typ, bei dem zunächst in einer Gasturbine die bei der Verbrennung des Brennstoffs gewonnene Expansionsenergie und anschließend in einer Dampfturbine die bei der Verbrennung erhaltene Wärmeenergie in elektrische Energie umgesetzt wird. Dieser Kraftwerkstyp hat einen besonders hohen Wirkungsgrad.

Die Aufgabe der Erfindung wird auch durch ein Verfahren zum Betreiben einer Papierfabrik gelöst, bei dem in der Papierfabrik, die eine Anordnung zur Rohstoffvorbehandlung und eine Papiermaschine umfasst, ein Rohstoff zu Paper verarbeitet wird, wobei die in der Papierfabrik verbrauchte elektrische Energie vor Ort in einem Kraftwerk durch Verbrennen eines Brennstoffs mit Sauerstoff erzeugt wird und das im Kraftwerk bei der Verbrennung des Brennstoffs mit Sauerstoff entstehende Kohlendioxid in der Papierfabrik in Kohlendioxid verbrauchenden Teilprozessen der Papierproduktion eingesetzt wird, wobei der zur Verbrennung des Brennstoffs im Kraftwerk benötigte Sauerstoff vor Ort in einer entsprechenden Einrichtung erzeugt wird. Mit dieser Ausgestaltung lassen sich erhebliche Synergieeffekte erzielen und Emissionszertifikate einsparen.

Solche Kohlendioxid verbrauchenden Teilprozesse bei der Papierproduktion sind beispielsweise die pH-Regulierung und/oder Entwässerungsbeschleunigung der bei der Papierherstellung entstehenden Fasersuspension und/oder die Beseitigung von Kleberesten (Stickyreduzierung) nach einem in der DE 2006 042 429 A1 beschriebenen Verfahren und/oder die Härtestabilisierung des eingesetzten Wassers und/oder die Reinigung von Bändern, insbesondere im Bereich der Trockenpartie, von klebrigen Anhaftungen durch Bestrahlung mit Trockeneisteilchen und/oder die Erzeugung von synthetischem Calziumcarbonat (PCC), das wiederum in der Papierproduktion als Füllstoff Verwendung findet.

Der zur Verbrennung des Brennstoffs im Kraftwerk benötigte Sauerstoff wird vor Ort in einer entsprechenden Einrichtung erzeugt, beispielsweise in einer Druckwechseladsorptionsanlage (PSA, VPSA) mit einer Reinheit von >95Vol.-% oder in einer kryogenen Luftzerlegungsanlage mit einer Reinheit von >99 Vol.-%. Bei diesen Einrichtungen wird zugleich Stickstoff produziert, der gleichfalls einer wirtschaftlichen Verwertung zugeführt werden kann.

Bevorzugt wird ein Teil des erzeugten Sauerstoffs als Beleber für eine biologische Klärstufe des Abwassers in einem der Papierfabrik zugeordneten Klärwerk und/oder zur Erzeugung von Ozon für die Ausschussbleiche und/oder zur bioziden Ozonbehandlung von Abwasser und/oder zum unmittelbaren Einsatz von Sauerstoff als Bleichmittel eingesetzt. Ach das erzeugte Ozon kann vorteilhaft in verschiedenen Teilprozessen, wie beispielsweise der Bleichung, verwendet werden. Bei der Abwasserklärung führt der Eintrag von Ozon in das Abwasser zu einer besonders drastischen Verminderung der mikrobiologischen Aktivität im Abwasser. Ozon führt zudem zu einer Entfärbung des Abwassers.

Eine vorteilhafte Weiterbildung der Erfindung sieht vor, dass der in einer Einrichtung zur Luftzerlegung erzeugte Stickstoff zum Inertisieren und/oder zur Behandlung der Fasersuspension vor der Mahlung eingesetzt wird.

Bei einer abermals bevorzugten Ausgestaltung der Erfindung wird in einem der Papierfabrik zugeordneten Klärwerk zur Reinigung des bei der Papierherstellung anfallenden Abwassers Biogas erzeugt, das als Brennstoff dem Kraftwerk zugeführt wird. Auf diese Weise wird der Einsatz von fossilem Brennstoff reduziert.

Soweit in der Einrichtung zur Sauerstofferzeugung bzw. der Einrichtung zur Luftzerlegung tiefkalte Luftgase erzeugt werden, ist es sinnvoll, den Kälteinhalt dieser Luftgase zum Zwecke der Kühlung einzusetzen. Die Luftgase werden somit vor oder während ihres Einsatzes bei der Verbrennung oder in verschiedenen Teilprozessen der Papierproduktion als Kühlmedium verwendet. Insbesondere ist es erforderlich, das zur Rückführung in den Papierverarbeitungsprozess bestimmte Abwasser vor oder nach seiner Klärung zu kühlen.

Zweckmäßigerweise wird der bei der Papierherstellung anfallende, in einem Ausschussbehälter gelagerte Ausschuss und/oder das Abwasser zur Bekämpfung der mikrobiologischen Aktivität wechselweise mit Kohlendioxid, Stickstoff und/oder Sauerstoff und/oder Ozon behandelt. Dabei wird in aufeinanderfolgenden Schritten der Ausschuss und/oder das Abwasser nacheinander mit oder abwechselnd mit mindestens zwei der genannten Gase beaufschlagt. Insbesondere der abwechselnde Eintrag von Kohlendioxid und Ozon führt zu einer besonders effizienten Bekämpfung der mikrobiologischen Aktivität.

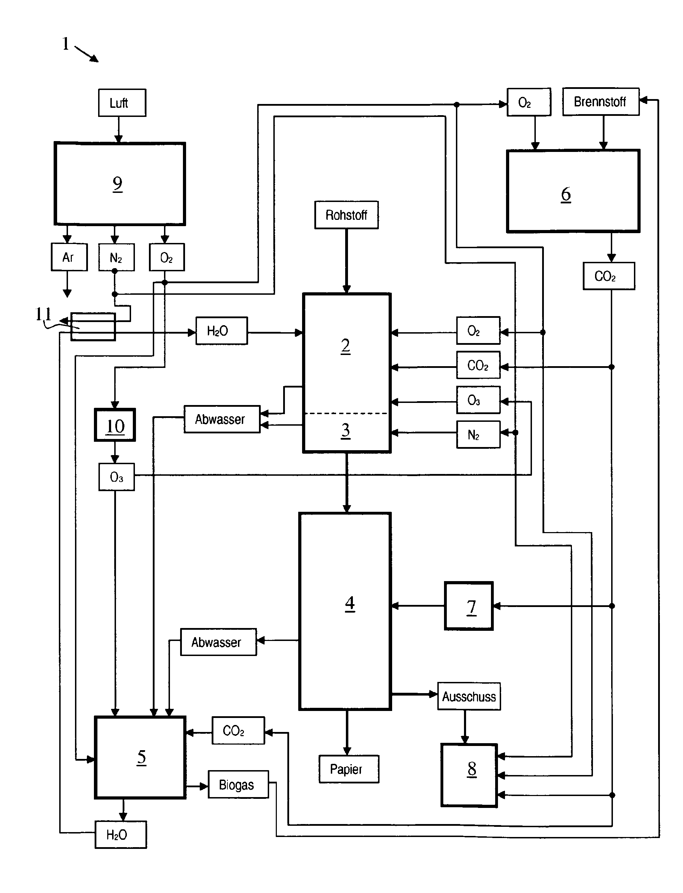

Anhand der Zeichnung soll ein Ausführungsbeispiel der Erfindung näher erläutert werden.

Die einzige Zeichnung zeigt schematisch die Erzeugung und den Einsatz verschiedener Hilfsstoffe in einer erfindungsgemäßen Anlage zur Papiererzeugung.

Die Anlage 1 umfasst als zentrales Element eine Papierfabrik mit einer Anordnung 2 zur Rohstoffvorbehandlung und einer Papiermaschine 4. In der Anordnung 2 zur Rohstoffvorbehandlung wird in an sich bekannter Weise ein Rohstoff für die Papierherstellung mechanisch und chemisch aufgearbeitet. Insbesondere wird der Rohstoff (Halbstoff) zerkleinert, und zu einer wässerigen Fasersuspension aufbereitet, die von unerwünschten Bestandteilen, wie beispielsweise Farbstoffe oder Kleberreste, befreit, gebleicht, entwässert und in einem der Anordnung 2 zugeordneten Mahlwerk 3 (Refiner) gemahlen wird. Der aufgearbeitete Rohstoff (Ganzstoff) wird anschließend der Papiermaschine 4 zugeführt, in der der aufbereitete Rohstoff in gleichfalls an sich bekannter Weise eine Siebpartie, eine Nasspressenpartie, eine Trockenpartie und ggf. einen Kalander durchläuft und nach Aufrollung die fertige Papierbahn bildet. Das bei der Rohstoffaufarbeitung in der Anordnung 2 und der Papiermaschine 4 anfallende Abwasser wird einer Kläranlage 5 zugeleitet; das in der Kläranlage 5 gereinigte Wasser wird zurückgeführt und kommt wieder in der Anordnung 2 zur Rohstoffvorbehandlung und/oder in der Papiermaschine 4 zum Einsatz.

Da viele Teilprozesse der Papierherstellung, insbesondere die mechanische Aufarbeitung des Rohstoffs, mit einem erheblichem Energieeinsatz einhergehen, umfasst die Anlage 1 ein Kraftwerk 6, in dem durch Verbrennung eines Brennstoffs mit einem Oxidationsmittel elektrischer Strom erzeugt wird. Beim Brennstoff handelt es sich beispielsweise um einen fossilen Brennstoff wie Erdgas, Erdöl oder Kohle; jedoch können auch andere brennbare Stoffe, wie Biogas, Biodiesel, Müll oder Klärabfälle als Brennstoffe oder als Zumischungen zum Brennstoff in Betracht kommen. Beispielsweise kann im Klärwerk 5 entstehendes Biogas als Brennstoff dem Kraftwerk 6 zugeführt oder dem Brennstoff beigemischt werden.

Um eine besonders hohe Energieeffizienz zu erzielen, handelt es sich beim Kraftwerk 6 um ein sogenanntes "Gas und Dampf" (GuD)-Kraftwerk, bei dem zur Erzeugung der elektrischen Energie zunächst in einer Gasturbine die Expansion der Verbrennungsgase und anschließend in einer Dampfturbine die Wärme der bei der Verbrennung erhitzten Verbrennungsgase genutzt wird.

Als Oxidationsmittel kommt im Kraftwerk 6 möglichst reiner Sauerstoff mit einem Sauerstoffanteil von über 95 Vol.-%, bevorzugt über 99 Vol.-% zum Einsatz. Die Verbrennung des Brennstoffs mit Sauerstoff in der Gasturbine erfolgt beispielsweise nach dem "Oxyfuel" - Verfahren, bei dem, ggf. nach einer geeigneten Filterung reines oder fast reines Kohlendioxid als Verbrennungsabgas entsteht. Alternativ zur Verbrennung kann aus dem Brennstoff zunächst ein Synthesegas, beispielsweise H2 + CO, gewonnen werden, das anschließend in der Gasturbine mit dem Sauerstoff unter Gewinnung von Kohlendioxid verbrannt wird.

Das im Kraftwerk 6 entstehende Kohlendioxid wird aufgefangen und in verschiedenen Teilprozessen in der Paperherstellung eingesetzt. Insbesondere wird ein Teil des Kohlendioxids zur pH-Regulierung und/oder bei der Entwässerung in der chemischen Aufbereitung des Rohstoffs in der Anordnung 2 eingesetzt und/oder bei der Beseitigung von Kleberresten (Stickies) nach dem in der DE 2006 042 429 A1 beschriebenen Verfahren. Ein weiterer Teil des Kohlendioxids wird der Kläranlage 5 zur bioziden Abwasserbehandlung zugeführt.

In einer weiteren Einsatzmöglichkeit wird Kohlendioxid zur Reinigung einer Oberfläche eingesetzt. Dazu wird das Kohlendioxid in einem Verflüssiger 7 durch Kompression verflüssigt. Das verflüssigte Kohlendioxid kann an einer hier nicht gezeigten Strahldüse unter Bildung von Kohlendioxidgas und Partikeln aus Kohlendioxidschnee entspannt werden. Die Partikel aus Kohlendioxid-Schnee können anschließend nach einem beispielsweise in der DE 10 2004 018 133 B3 oder der DE 10 2005 054 246 A1 beschriebenen Verfahren als Trockeneisstrahl ausgetragen und zur Reinigung einer Oberfläche eingesetzt werden. Im Papierverarbeitungsprozess bietet sich als bevorzugte Oberfläche zur Reinigung mittels Trockenschneestrahlen die Oberfläche eines in der Papiermaschine rundum laufenden Siebes an. Durch die Bestrahlung mit Trockeneisteilchen wird die Sieboberfläche während des laufenden Papierherstellprozesses von klebrigen Anhaftungen befreit, wodurch der Anfall an Ausschuss reduziert wird.

In einer wieder anderen Anwendung kann die mikrobiologische Aktivität des bei der Papierherstellung anfallenden und in einem Ausschussbehälter 8 gesammelten Ausschusses durch Behandlung mit Kohlendioxid reduziert werden.

Weiterhin kann (hier nicht gezeigt) das Kohlendioxid nach der Formel

Ca(OH)₂ + CO₂ → CaCO₃ + H₂O

zur synthetischen Herstellung von Calziumcarbonat aus Calciumhydroxid (Kalkmilch) eingesetzt werden. Calciumcarbonat findet bei der Papierherstellung insbesondere als Füllstoff Verwendung.

Der für die Verbrennung des Brennstoffes im Kraftwerk 6 erforderliche Sauerstoff wird in einem gleichfalls am Standort der Papierfabrik vorhandenen Luftzerleger 9 erzeugt. Der Luftzerleger 9, der seinen Energiebedarf aus dem Kraftwerk 6 deckt, zerlegt Luft in Stickstoff (N₂), Sauerstoff (O₂), sowie gegebenenfalls in weitere Bestandteile, insbesondere Argon (Ar) und weitere Edelgase. Der durch den Luftzerleger 9 erzeugte Sauerstoff wird überwiegend dem Kraftwerk 6 zur Verbrennung des Brennstoffs in der Verbrennungskammer einer Gasturbine zugeleitet. Der aus dem Luftzerleger nach Verdampfung ohnehin mit hohem Druck vorliegende Sauerstoff kann dabei beispielsweise nach einem in der DE 10 2007 028 136 A1 beschriebenen Verfahren der Verbrennungskammer der Gasturbine direkt, ohne vorherige Vermischung mit dem Brennstoff und anschließender Kompression, zugeleitet werden, wodurch eine zusätzliche Energieeinsparung erzielt werden kann.

Ein Teil des Sauerstoffs wird der Anordnung 2 zur Rohstoffbehandlung zugeführt und dort insbesondere, nach einem an sich bekannten Verfahren, zum Bleichen des Rohstoffes eingesetzt. Ein weiterer Teil des Sauerstoffs wird einem Belebungsbecken des Klärwerks 5 zugeleitet. Ein wieder anderer Teil des Sauerstoffs wird in einem Ozonisator 10 zu Ozon (O₃) umgesetzt und der Anordnung 2 zur Rohstoffvorbehandlung zugeführt und ergänzend oder anstelle des Sauerstoffs zum Bleichen des Rohstoffs eingesetzt. Durch den Einsatz von Sauerstoff und/oder Ozon kann auf den Einsatz von chemischen Bleichmitteln zumindest weitgehend verzichtet werden; aufgrund der Vor-Ort-Produktion des Sauerstoffs ist zudem ein wirtschaftlicher Einsatz der Sauerstoffbleiche möglich. Zumindest ein Teil des im Ozonisator 10 erzeugten Ozons wird, unabhängig vom Einsatz des Ozons als Bleichmittel, zur Abwasserreinigung im Klärwerk 5 eingesetzt. Der Eintrag von Ozon in das Abwasser, der mittels geeigneter Lanzen erfolgt, führt zu einer Entfärbung des Abwassers sowie einer drastischen Reduktion der mikrobiologischen Aktivität. Zur Bekämpfung anaerober mikrobiologischer Aktivität wird Sauerstoff und /oder Ozon zudem im Ausschussbehälter 8 zum Einsatz gebracht. Besonders vorteilhaft zur Bekämpfung der mikrobiologischen Aktivität erweist sich eine aufeinander folgende oder sich mehrfach abwechselnde Behandlung des Abwasser zunächst mit Sauerstoff und/oder Ozon und anschließend mit Kohlendioxid.

Der im Luftzerleger 9 gewonnene Stickstoff kommt vorteilhaft als Inertgas, beispielsweise bei der Lagerung des in der Papierproduktion entstehenden Ausschusses im Ausschussbehälter 8 zum Einsatz. Vor seiner Wiederverwertung wird dieser Ausschuss für einen längeren Zeitraum, oft für 24 Stunden oder länger, gelagert. Durch die Lagerung unter Inertgasbedingungen kann die biologische Aktivität des im Ausschussbehälter 8 gelagerten Ausschusses reduziert werden. Weiterhin kann der Stickstoff im bevorzugt flüssigen Zustand der Anordnung 2 zur Rohstoffvorbehandlung zugeführt werden. Die Zugabe von flüssigem Stickstoff in die bei der Aufarbeitung des Rohstoffs entstehende wässrige Fasersuspension führt zu einem Aufquellen der Fasern, wodurch die anschließende Mahlung erleichtert wird. Weiterhin kann der Kälteinhalt der im kryogen arbeitenden Luftzerleger 10 erzeugten Luftgase dazu eingesetzt werden, das zur Rückführung in den Prozess bestimmte Abwasser nach oder vor seiner Klärung zu kühlen.

Das bei der Luftzerlegung anfallende Argon eignet sich als Intergas oder kann in sonstigen Verfahren außerhalb der Papierherstellung eingesetzt werden und zu diesem Zweck verkauft werden. Im Übrigen können die im tiefkalt verflüssigten Zustand bei der Luftzerlegung anfallenden Luftgase in verschiedenen Prozessen als Kühlmedium eingesetzt werden, beispielsweise zur Kühlung des gereinigten, der Papiermaschine wieder zugeführten Wassers mittels eines Wärmetauschers 11.

Durch die erfindungsgemäße Kombination einer Papierfabrik mit einem Kraftwerk in dem reiner oder nahezu reiner Sauerstoff als Oxidationsmittel für einen Brennstoff eingesetzt wird, werden in hohem Maße Synergien zwischen Papierherstellung und Energieerzeugung genutzt und dadurch der Energie- und Frischwasserverbrauch gesenkt, CO₂-Emissionen verringert sowie der Einsatz verschiedener Chemikalien reduziert. Die Synergieeffekte werden weiter dadurch vergrößert, dass am Standort eine Einrichtung zur Sauerstofferzeugung vorgesehen ist, insbesondere einem Luftzerleger, die bzw. der den im Kraftwerk benötigten sowie in verschiedenen Prozessen der Papierherstellung einsetzbaren Sauerstoff vor Ort produziert. Je nach den für die Papierherstellung geforderten Parametern ist eine sogar die vollständige Verwertung des hergestellten Sauerstoffs und des erzeugten Kohlendioxids im Paperherstellungsprozess vorstellbar.

### Bezugszeichenliste

- 1.: Anlage
- 2.: Anordnung zur Rohstoffvorbehandlung
- 3.: Mahlwerk
- 4.: Papiermaschine
- 5.: Kläranlage
- 6.: Kraftwerk
- 7.: Verflüssiger
- 8.: Ausschussbehälter
- 9.: Luftzerleger
- 10.: Ozonisator
- 11.: Wärmetauscher

## Patentansprüche

1. Anlage zur Papierproduktion, bei der an einem Standort eine Papierfabrik mit einer Anordnung (2) zur Rohstoffvorbehandlung und einer Papiermaschine (4), sowie ein Kraftwerk (6) zur Erzeugung elektrischer Energie für die Papierfabrik vorgesehen ist,
**dadurch gekennzeichnet,**
**dass** das Kraftwerk (6) von einem Kraftwerkstyp ist, in dem der Brennstoff mittels zumindest weitgehend reinen Sauerstoffs unter Entstehung von zumindest weitgehend reinem Kohlendioxid umgesetzt wird dass Mittel zum Zuführen von im Kraftwerk (6) erzeugtem Kohlendioxid zu Kohlendioxid verbrauchenden Teilprozessen in der Papierfabrik vorgesehen sind, wobei am Standort eine Einrichtung (9) zum Erzeugen des im Kraftwerk verbrauchten Sauerstoffs vorgesehen ist.

2. Anlage nach Anspruch 1, **dadurch gekennzeichnet, dass** es sich beim Kraftwerk (6) um ein Kraftwerk vom "Oxyfuel"- oder "Pre-Combustion-Capture"-Typ ist.

3. Anlage nach Anspruch 1 oder 2, **dadurch gekennzeichnet, dass** dem Standort eine Einrichtung (10) zum Erzeugen von Ozon aus dem in der Einrichtung zur Sauerstofferzeugung erzeugtem Sauerstoff zugeordnet ist.

4. Anlage nach Anspruch 3, **gekennzeichnet durch** Mittel zum Zuführen eines Teils des in der Einrichtung (9, 10) erzeugten Sauerstoffs und/oder Ozons zu Sauerstoff verbrauchenden Teilprozessen in der Papierfabrik.

5. Anlage nach einem der vorhergehenden Ansprüche, **dadurch gekennzeichnet, dass** als Einrichtung zur Erzeugung von Sauerstoff eine Einrichtung (9) zur Luftzerlegung, insbesondere eine VPSA-Anlage oder eine kryogene Luftzerlegungsanlage, vorgesehen ist, in der neben Sauerstoff zumindest Stickstoff erzeugt wird.

6. Anlage nach Anspruch 5, **gekennzeichnet durch** Mittel zum Zuführen des in der Einrichtung (9) zur Luftzerlegung erzeugten Stickstoffs zu Stickstoff verbrauchenden Teilprozessen in der Papierfabrik.

7. Anlage nach Anspruch 6, **dadurch gekennzeichnet, dass** der in der Einrichtung (9) zur Luftzerlegung erzeugte Stickstoff einer der Anordnung (2) zur Rohstoffvorbehandlung zugeordneten Mahleinrichtung (3) zugeführt wird.

8. Anlage nach einem der vorhergehenden Ansprüche, **dadurch gekennzeichnet, dass** ein Abwasserklärwerk (5) zur Reinigung des bei der Rohstoffvorbehandlung und bei der Papierherstellung in der Papiermaschine (4) anfallenden Abwassers sowie Mittel zum Zuführen von in der Einrichtung erzeugtem Sauerstoff und/der Ozon zur Kläranlage (5) zwecks biologischer Abwasserbehandlung vorgesehen sind.

9. Anlage nach einem der vorhergehenden Ansprüche, **dadurch gekennzeichnet, dass** als Kraftwerk (6) ein GuD - Kraftwerk zum Einsatz kommt.

10. Verfahren zum Betreiben einer Papierfabrik, bei dem in der eine Anordnung (2) zur Rohstoffvorbehandlung und eine Papiermaschine (4) umfassenden Papierfabrik ein Rohstoff zu Paper verarbeitet wird, wobei
- die in der Papierfabrik verbrauchte elektrische Energie vor Ort in einem Kraftwerk (6) durch Verbrennen eines Brennstoffs mit Sauerstoff erzeugt wird und
- das im Kraftwerk (6) bei der Verbrennung des Brennstoffs mit Sauerstoff entstehende Kohlendioxid in der Papierfabrik in Kohlendioxid verbrauchenden Teilprozessen der Papierproduktion eingesetzt wird.
- der zur Verbrennung des Brennstoffs benötigte Sauerstoff vor Ort in einer Einrichtung (9) zur Luftzerlegung gewonnen wird.

11. Verfahren nach Anspruch 10, **dadurch gekennzeichnet**, das als Kohlendioxid verbrauchende Teilprozess einer oder mehrere der folgenden Teilprozesse zum Einsatz kommen: pH-Regulierung und/oder Entwässerungsbeschleunigung einer Fasersuspension und/oder Stickyreduzierung und/oder Härtestabilisierung des eingesetzten Wassers und/oder die Reinigung von Bändern, insbesondere im Bereich der Trockenpartie, von klebrigen Anhaftungen durch Bestrahlung mit Trockeneisteilchen und/oder die Erzeugung von Kalziumkarbonat und/oder die Beladung von Fasern der Fasersuspension mit Calciumcarbonat.

12. Verfahren nach Anspruch 10 oder 11, **dadurch gekennzeichnet, dass** ein Teil des in der Einrichtung (9) zur Luftzerlegung erzeugten Sauerstoffs als Beleber für eine biologische Klärstufe des Abwassers in einem der Papierfabrik zugeordneten Klärwerk (5) und/oder zur Erzeugung von Ozon für die Ausschussbleiche und/oder zur bioziden Ozonbehandlung von Abwasser und/oder zum unmittelbaren Einsatz von Sauerstoff als Bleichmittel eingesetzt wird.

13. Verfahren nach Anspruch 10 bis 12, **gekennzeichnet durch** die Erzeugung von Stickstoff in der Einrichtung (9) zur Luftzerlegung, welcher Stickstoff zum Inertisieren und/oder zur Behandlung von Fasersuspension vor der Mahlung eingesetzt wird.

14. Verfahren nach einem der Ansprüche 10 bis 13, **dadurch gekennzeichnet, dass** in einem der Papierfabrik zugeordneten Klärwerk (5) zur Reinigung von Abwasser Biogas erzeugt wird, das als Brennstoff dem Kraftwerk (6) zugeführt wird.

15. Verfahren nach einem der Ansprüche 10 bis 14, **dadurch gekennzeichnet, dass** in der Einrichtung (9) zur Luftzerlegung tiefkalt erzeugte Luftgase als Kühlmedien, insbesondere zum Kühlen des gereinigten Abwassers vor seiner Zuführung an die Papierfabrik, eingesetzt werden.

16. Verfahren nach einem der Ansprüche 10 bis 15, **dadurch gekennzeichnet, dass** der bei der Papierherstellung anfallende Ausschuss und/oder das Abwasser zur Bekämpfung der mikrobiologischen Aktivität wechselweise mit Kohlendioxid, Stickstoff und/oder Sauerstoff und/oder Ozon behandelt wird.

## Claims

1. Facility for paper production, in which, at one location, a paper factory having an arrangement (2) for raw material pretreatment and a paper-making machine (4), and also a power plant (6) for generating electrical energy for the paper factory, is provided, **characterized in that** the power plant (6) is of a power plant type in which the fuel is reacted by means of at least substantially pure oxygen, with formation of at least substantially pure carbon dioxide, and **in that** means for feeding carbon dioxide generated in the power plant (6) to carbon dioxide-consuming subprocesses in the paper factory are provided, wherein at the location an appliance (9) for generating the oxygen consumed in the power plant is provided.

2. Facility according to Claim 1, **characterized in that** the power plant (6) is a power plant of the "oxy-fuel" or "pre-combustion capture" type.

3. Facility according to Claim 1 or 2, **characterized in that** an appliance (10) for generating ozone from the oxygen generated in the appliance for oxygen generation is assigned to the location.

4. Facility according to Claim 3, **characterized by** means for feeding a part of the oxygen and/or ozone generated in the appliance (9, 10) to oxygen-consuming subprocesses in the paper factory.

5. Facility according to any one of the preceding claims, **characterized in that**, as appliance for generating oxygen, an appliance (9) for air separation, in particular a VPSA facility, or a cryogenic air separation facility, is provided, in which, in addition to oxygen, at least nitrogen is generated.

6. Facility according to Claim 5, **characterized by** means for feeding the nitrogen generated in the appliance (9) for air separation to nitrogen-consuming subprocesses in the paper factory.

7. Facility according to Claim 6, **characterized in that** the nitrogen generated in the appliance (9) for air separation is fed to a milling appliance (3) assigned to the arrangement (2) for raw material pretreatment.

8. Facility according to any one of the preceding claims, **characterized in that** a wastewater treatment plant (5) for cleaning up the wastewater produced in the raw material pretreatment and in the paper manufacture in the paper-making machine (4), and also means for feeding oxygen and/or ozone generated in the appliance to the treatment facility (5) for the purpose of biological wastewater treatment are provided.

9. Facility according to any one of the preceding claims, **characterized in that** the power plant (6) used is a combined cycle power plant.

10. Method for operating a paper factory, in which, in the paper factory comprising an arrangement (2) for raw material pretreatment and a paper-making machine (4), a raw material is processed to paper, wherein
- the electrical energy consumed in the paper factory is generated on site in a power plant (6) by burning a fuel with oxygen and
- the carbon dioxide formed in the power plant (6) in the combustion of fuel with oxygen is used in the paper factory in carbon dioxide-consuming subprocesses of paper production,
- the oxygen required for combustion of the fuel is obtained on site in an appliance (9) for air separation.

11. Method according to Claim 10, **characterized in that**, as carbon dioxide-consuming subprocess, one or more of the following subprocesses are used: pH control and/or dewatering acceleration of a fibre suspension and/or reduction of stickies and/or hardness stabilization of the water used and/or the cleaning of belts, in particular in the region of the dry section, from sticky adhesions by blasting with dry ice particles and/or the generation of calcium carbonate and/or the loading of fibres of the fibre suspension with calcium carbonate.

12. Method according to Claim 10 or 11, **characterized in that** a part of the oxygen generated in the appliance (9) for air separation is used as activator for a biological wastewater clarification stage in a treatment plant (5) assigned to the paper factory and/or for generating ozone for the bleaching of broke and/or for the biocidal ozone treatment of wastewater and/or for the immediate use of oxygen as bleach.

13. Method according to Claim 10 to 12, **characterized by** the generation of nitrogen in the appliance (9) for air separation, which nitrogen is used for inertization and/or for treatment of fibre suspension before milling.

14. Method according to any one of Claims 10 to 13, **characterized in that**, in a treatment plant (5) assigned to the paper factory for cleaning of wastewater, biogas is generated which is fed as fuel to the power plant (6).

15. Method according to any one of Claims 10 to 14, **characterized in that**, in the appliance (9) for air separation, cryogenically generated air gases are used as cooling media, in particular for cooling the cleaned wastewater before same is fed to the paper factory.

16. Method according to any one of Claims 10 to 15, **characterized in that** the broke and/or wastewater produced in the paper manufacture are treated alternately with carbon dioxide, nitrogen and/or oxygen and/or ozone for combating microbioligical activity.

## Revendications

1. Installation pour la production de papier, dans laquelle il est prévu sur un site une usine à papier avec un dispositif (2) pour le pré-traitement des matières premières et une machine à papier (4), ainsi qu'une centrale thermique (6) pour la production d'énergie électrique pour l'usine à papier, **caractérisée en ce que** la centrale thermique (6) est du type de centrale thermique dans laquelle le combustible est converti au moyen d'oxygène au moins largement pur avec production de dioxyde de carbone au moins largement pur, **en ce qu'**il est prévu des moyens pour ajouter du dioxyde de carbone produit dans la centrale thermique (6) à des processus partiels consommant du dioxyde de carbone dans l'usine à papier, dans laquelle il est prévu sur le site un dispositif (9) pour produire l'oxygène consommé dans la centrale thermique.

2. Installation selon la revendication 1, **caractérisée en ce que** la centrale thermique (6) est une centrale thermique du type "Oxyfuel" ou "Pre-Combustion-Capture".

3. Installation selon la revendication 1 ou 2, **caractérisée en ce qu'**un dispositif (10) pour la production d'ozone à partir de l'oxygène produit dans le dispositif de production d'oxygène est associé au site.

4. Installation selon la revendication 3, **caractérisée par** des moyens pour ajouter une partie de l'oxygène et/ou de l'ozone produit dans le dispositif (9, 10) à des processus partiels consommant de l'oxygène dans l'usine à papier.

5. Installation selon l'une quelconque des revendications précédentes, **caractérisée en ce qu'**il est prévu comme dispositif pour la production d'oxygène un dispositif (9) pour la décomposition de l'air, en particulier une installation VPSA, ou une installation cryogénique de décomposition de l'air, dans laquelle on produit au moins de l'azote en plus de l'oxygène.

6. Installation selon la revendication 5, **caractérisée par** des moyens pour ajouter l'azote produit dans le dispositif (9) pour la décomposition de l'air à des processus partiels consommant de l'azote dans l'usine à papier.

7. Installation selon la revendication 6, **caractérisée en ce que** l'azote produit dans le dispositif (9) pour la décomposition de l'air est ajouté à un dispositif de broyage (3) associé au dispositif (2) pour le pré-traitement des matières premières.

8. Installation selon l'une quelconque des revendications précédentes, **caractérisée en ce qu'**il est prévu un décanteur d'eaux usées (5) pour l'épuration des eaux usées produites lors du pré-traitement des matières premières et lors de la fabrication de papier dans la machine à papier (4) ainsi que des moyens pour ajouter de l'oxygène et/ou de l'ozone produit dans le dispositif à l'installation de décantation (5) en vue du traitement biologique des eaux usées.

9. Installation selon l'une quelconque des revendications précédentes, **caractérisée en ce que** l'on utilise comme centrale thermique (6) une centrale thermique GuD.

10. Procédé de conduite d'une usine à papier, dans lequel on transforme des matières premières en papier dans l'usine à papier comprenant un dispositif (2) pour le pré-traitement des matières premières et une machine à papier (4), dans lequel
- l'énergie électrique consommée dans l'usine à papier est produite sur place dans une centrale thermique (6) par combustion d'un combustible avec de l'oxygène, et
- le dioxyde de carbone produit dans la centrale thermique (6) lors de la combustion du combustible avec de l'oxygène est utilisé dans l'usine à papier dans des processus partiels de la production de papier consommant du dioxyde de carbone,
- l'oxygène nécessaire pour la combustion du combustible est produit sur place dans un dispositif (9) pour la décomposition de l'air.

11. Procédé selon la revendication 10, **caractérisé en ce que** l'on utilise comme processus partiels consommant du dioxyde de carbone un ou plusieurs des processus partiels suivants: régulation du pH et/ou accélération de l'essorage d'une suspension de fibres et/ou réduction de l'azote et/ou stabilisation de la dureté de l'eau utilisée et/ou le nettoyage de bandes, en particulier dans la section de séchage, des adhérences collantes par projection de particules de glace sèche et/ou la production de carbonate de calcium et/ou le chargement de fibres de la suspension de fibres avec du carbonate de calcium.

12. Procédé selon la revendication 10 ou 11, **caractérisé en ce qu'**une partie de l'oxygène produit dans le dispositif (9) pour la décomposition de l'air est utilisée comme activateur pour un étage d'épuration biologique des eaux usées dans un décanteur (5) associé à l'usine à papier et/ou pour la production d'ozone pour le blanchiment des rejets et/ou le traitement biocide à l'ozone des eaux usées et/ou pour l'utilisation immédiate d'oxygène comme agent de blanchiment.

13. Procédé selon une revendication 10 à 12, **caractérisé par** la production d'azote dans le dispositif (9) pour la décomposition de l'air, azote qui est utilisé pour l'inertisation et/ou pour le traitement de suspension de fibres avant le broyage.

14. Procédé selon l'une quelconque des revendications 10 à 13, **caractérisé en ce que** l'on produit, dans un décanteur (5) associé à l'usine à papier pour l'épuration des eaux usées, du biogaz, qui est ajouté comme combustible à la centrale thermique (6).

15. Procédé selon l'une quelconque des revendications 10 à 14, **caractérisé en ce que** l'on utilise des gaz de l'air produits de façon cryogénique dans le dispositif (9) pour la décomposition de l'air, comme fluides de refroidissement, en particulier pour refroidir les eaux usées épurées avant leur envoi à l'usine à papier.

16. Procédé selon l'une quelconque des revendications 10 à 15, **caractérisé en ce que** les rejets produits lors de la fabrication de papier et/ou les eaux usées sont traités alternativement avec du dioxyde de carbone, de l'azote et/ou de l'oxygène et/ou de l'ozone pour combattre leur activité micro-biologique.
